# FASCICULE DE BREVET EUROPEEN

(11) **EP 3 605 749 B1**
(45) Date de publication et mention de la délivrance du brevet: **12.01.2022**
(21) Numéro de dépôt: 19188243.0
(22) Date de dépôt: 25.07.2019
(51) Int. Cl.: H01R 27/00, H02G 3/08, H01R 31/06, H02G 3/12, H02G 3/16, H02G 3/18, H01R 9/24, H01R 13/74, H01R 24/78

(54) **SUPPORT D'APPAREILLAGE ÉLECTRIQUE ET APPAREILLAGE ÉLECTRIQUE ASSOCIÉ**
HALTERUNG FÜR EIN ELEKTRISCHES GERÄT UND ENTSPRECHENDES ELEKTRISCHES GERÄT
SUPPORT FOR ELECTRICAL EQUIPMENT AND ASSOCIATED ELECTRICAL EQUIPMENT

(30) Priorité: 31.07.2018 FR 1857165
(43) Date de publication de la demande: 05.02.2020
(73) Titulaire: Legrand France, 87000 Limoges (FR); Legrand SNC, 87000 Limoges (FR)
(72) Inventeur: BRASSEAU, Boris, 87700 Saint Priest sous aixe (FR); DELMAS, Simon, 87400 La Geneytouse (FR)
(74) Mandataire: Jacobacci Coralis Harle

(56) Documents cités:
- EP-A2- 2 793 337
- FR-A1- 3 000 305
- US-A1- 2002 185 296
- US-A1- 2012 094 511
- US-A1- 2015 000 972
- US-A1- 2015 280 410
- US-A1- 2016 134 062
- US-B1- 9 793 697

## Description

### DOMAINE TECHNIQUE AUQUEL SE RAPPORTE L'INVENTION

La présente invention concerne de manière générale le domaine des appareillages électriques, et, en particulier, des supports d'appareillage électrique.

Elle concerne plus particulièrement un support d'appareillage conforme au préambule de la revendication 1.

L'invention concerne également un appareillage électrique comportant un tel support d'appareillage et un mécanisme d'appareillage fixé dans le logement de réception de ce support d'appareillage.

### ARRIERE-PLAN TECHNOLOGIQUE

On connaît du document US2002185296 une boîte électrique qui loge un bloc d'alimentation électrique, lequel est destiné à alimenter un mécanisme d'appareillage. La paroi avant du bloc est percée de fentes destinées à recevoir des broches de connexion électriques qui émergent à l'arrière du mécanisme d'appareillage. Le mécanisme d'appareillage comporte des pattes flexibles pour s'accrocher dans des emplacements crantés prévu directement dans la face interne de la boîte électrique. Un tel système électrique ne comporte pas de support d'appareillage à proprement parlé, encore moins un support d'appareillage du type précité.

On connaît du document US20150280410 un support d'appareillage électrique tel que précité destiné à recevoir un mécanisme d'appareillage pourvu de broches de connexion. Dans ce document, le fond du logement est fermé par une paroi intégrale avec la paroi latérale du support d'appareillage, derrière laquelle se trouvent des bornes disposées sur une plaque rigide de type circuit imprimé. La fabrication d'un tel support d'appareillage est complexe, et chaque support d'appareillage est spécifique de chaque mécanisme d'appareillage.

On connaît aussi du document EP2477290 un support d'appareillage du type précité mais dans lequel la paroi de fond ne ferme pas intégralement le logement. Un tel support d'appareillage est susceptible de recevoir différents mécanismes d'appareillage. Il est aménagé avec une ouverture large dans le fond du logement de manière à permettre l'introduction d'outils pour connecter convenablement aux bornes de connexion les fils électriques provenant du réseau.

Avec ce support d'appareillage, un installateur peut facilement accéder aux bornes de connexion, aussi bien depuis l'extérieur que depuis l'intérieur du logement, de sorte qu'il est aisé d'agencer correctement les fils d'alimentation électriques.

Cependant, l'accès aisé aux éléments électriques portés par ce support d'appareillage interdit qu'un utilisateur quelconque, non spécialiste des installations électriques, puisse lui-même facilement, sans précaution particulière, changer le mécanisme d'appareillage reçu dans ce support.

### OBJET DE L'INVENTION

Afin de remédier à l'inconvénient précité de l'état de la technique, la présente invention propose un support d'appareillage sécuritaire, qui autorise un utilisateur non spécialisé à changer le mécanisme d'appareillage reçu dans ledit support sans avoir accès aux éléments de connexion électrique du support d'appareillage.

Plus particulièrement, on propose selon l'invention un support d'appareillage conforme à la revendication 1.

Ainsi, les bornes de connexion électrique sont alimentées depuis l'extérieur du logement, et, une fois le support d'appareillage fixé dans la boîte électrique, ces bornes de connexion ne sont accessibles que depuis l'intérieur du logement, via les ouvertures individuelles du capot d'isolation.

Le capot d'isolation forme ainsi un moyen d'enfermement sécuritaire des bornes de connexion à l'intérieur du support d'appareillage, protégeant l'utilisateur de tout contact avec les éléments de connexion électrique du support. Le fait que le capot d'isolation soit rapporté dans le logement du support facilite la fabrication du support.

Une fois le support d'appareillage correctement alimenté par les fils électriques du réseau, et installé dans la boîte électrique, un utilisateur quelconque peut en toute sécurité connecter le mécanisme d'appareillage dans le support, sans risquer de toucher ou modifier le branchement des bornes de connexion électrique. Il suffit pour cela d'insérer ledit mécanisme d'appareillage dans le logement de réception, de sorte que chacune des broches de connexion dudit mécanisme d'appareillage s'insèrent dans la borne de connexion correspondante du support.

En outre, le support d'appareillage peut recevoir différents types de mécanismes d'appareillages, et permet ainsi la modularité de l'appareillage électrique en ce sens qu'il autorise un changement de fonction électrique dudit appareillage électrique, en toute sécurité.

D'autres caractéristiques non limitatives et avantageuses du support d'appareillage conforme à l'invention, prises individuellement ou selon toutes les combinaisons techniquement possibles, sont données dans les revendications 2 à 14.

L'invention propose également un appareillage électrique conforme à la revendication 15.

Ainsi, un utilisateur peut facilement changer la fonction de l'appareillage électrique en retirant le mécanisme d'appareillage associé à cette fonction et en le remplaçant par un autre mécanisme d'appareillage portant une autre fonction du même type. Il peut par exemple, facilement et sans danger, changer un mécanisme de puissance de type « prise de courant » par un mécanisme de puissance de type « prise USB ». Il peut aussi changer un mécanisme de commutation de type « interrupteur simple » par un mécanisme de commutation de type « double va-et-vient ».

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective avant d'un premier mode de réalisation d'un support d'appareillage conforme à l'invention ;
- la figure 2 est une vue schématique en perspective éclatée du support d'appareillage de la figure 1 ;
- la figure 3 est une vue schématique en perspective arrière du support d'appareillage de la figure 1 dans lequel est monté un mécanisme d'appareillage ;
- la figure 4 est une vue schématique en perspective arrière du capot d'isolation appartenant au support d'appareillage de la figure 2 ;
- la figure 5 est une vue schématique en perspective éclatée d'un appareillage électrique conforme à l'invention comprenant le support d'appareillage de la figure 1 et un mécanisme d'appareillage choisi parmi un des premier, deuxième, troisième et quatrième mécanismes d'appareillage représentés, ledit appareillage électrique étant reçu dans une boîte électrique et recouvert par une plaque d'habillage ;
- les figures 6, 7 et 8 sont des vues schématiques arrière du premier, troisième et quatrième mécanisme d'appareillage représentés sur la figure 5 ;
- la figure 9 est une vue schématique en perspective arrachée d'un appareillage électrique conforme à l'invention ;
- la figure 10 est une vue schématique d'une coupe de l'appareillage électrique de la figure 9 ;
remplaçant par un autre mécanisme d'appareillage portant une autre fonction du même type. Il peut par exemple, facilement et sans danger, changer un mécanisme de puissance de type « prise de courant » par un mécanisme de puissance de type « prise USB ». Il peut aussi changer un mécanisme de commutation de type « interrupteur simple » par un mécanisme de commutation de type « double va-et-vient ».

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

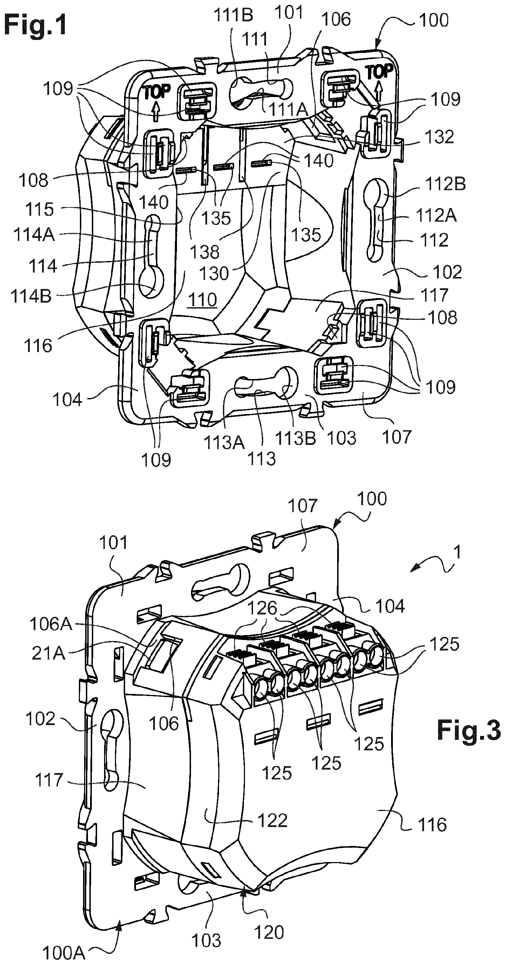

- la figure 1 est une vue schématique en perspective avant d'un premier mode de réalisation d'un support d'appareillage conforme à l'invention ;

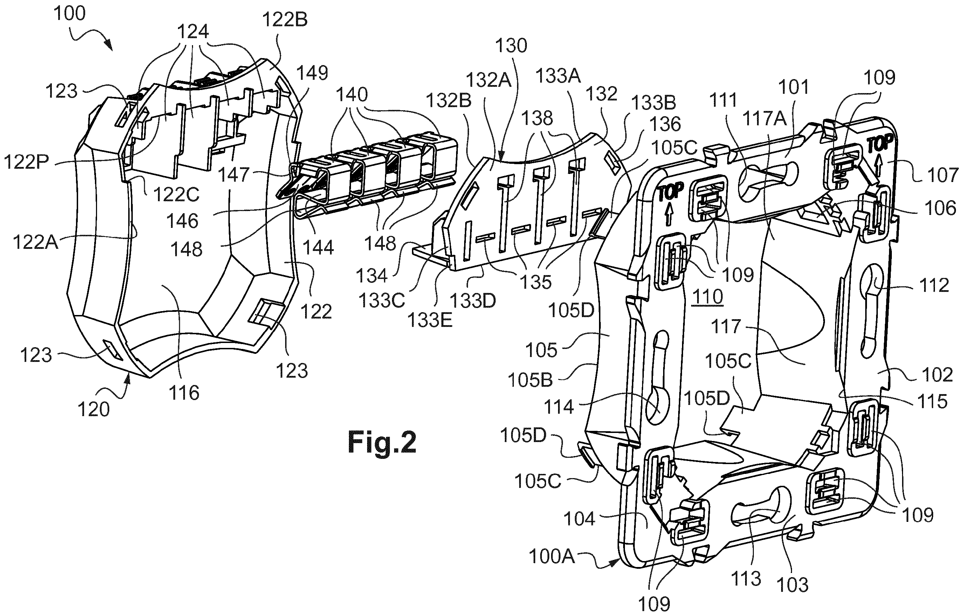

- la figure 2 est une vue schématique en perspective éclatée du support d'appareillage de la figure 1 ;
- la figure 3 est une vue schématique en perspective arrière du support d'appareillage de la figure 1 dans lequel est monté un mécanisme d'appareillage ;

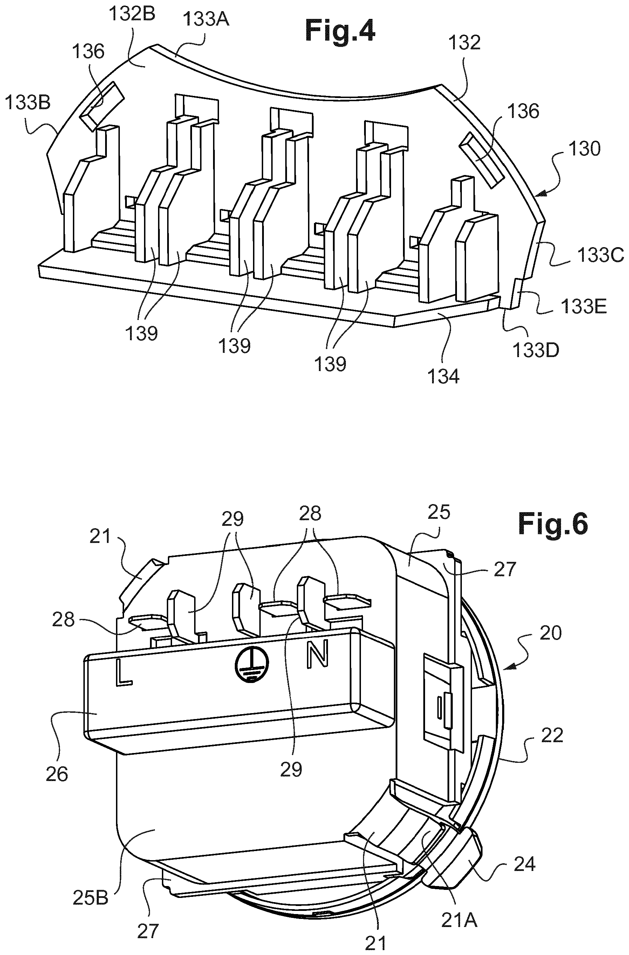

- la figure 4 est une vue schématique en perspective arrière du capot d'isolation appartenant au support d'appareillage de la figure 2 ;

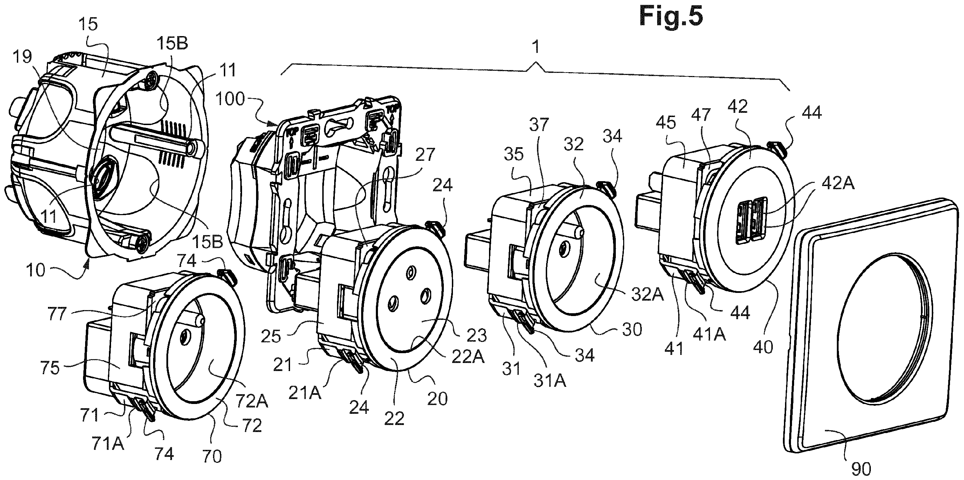

- la figure 5 est une vue schématique en perspective éclatée d'un appareillage électrique conforme à l'invention comprenant le support d'appareillage de la figure 1 et un mécanisme d'appareillage choisi parmi un des premier, deuxième, troisième et quatrième mécanismes d'appareillage représentés, ledit appareillage électrique étant reçu dans une boîte électrique et recouvert par une plaque d'habillage ;
- les figures 6, 7 et 8 sont des vues schématiques arrière du premier, troisième et quatrième mécanisme d'appareillage représentés sur la figure 5 ;

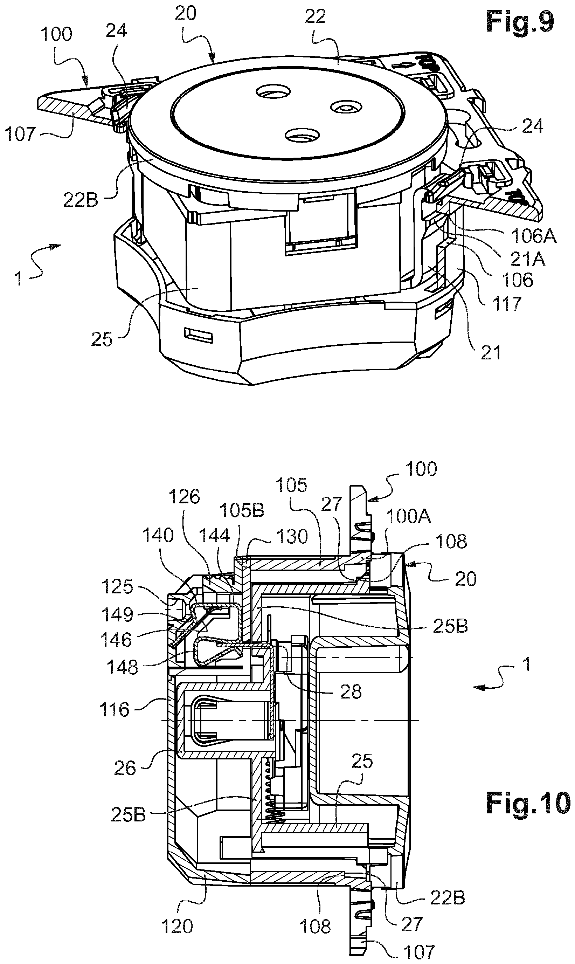

- la figure 9 est une vue schématique en perspective arrachée d'un appareillage électrique conforme à l'invention ;
- la figure 10 est une vue schématique d'une coupe de l'appareillage électrique de la figure 9 ;

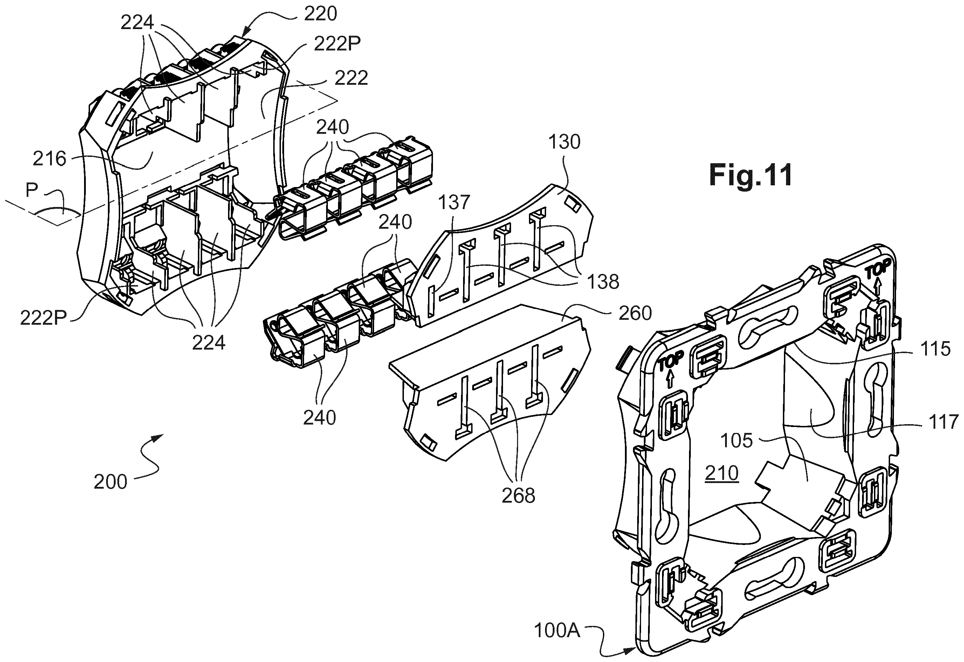

- la figure 11 est une vue schématique en perspective éclatée d'un deuxième mode de réalisation d'un support d'appareillage conforme à l'invention ;

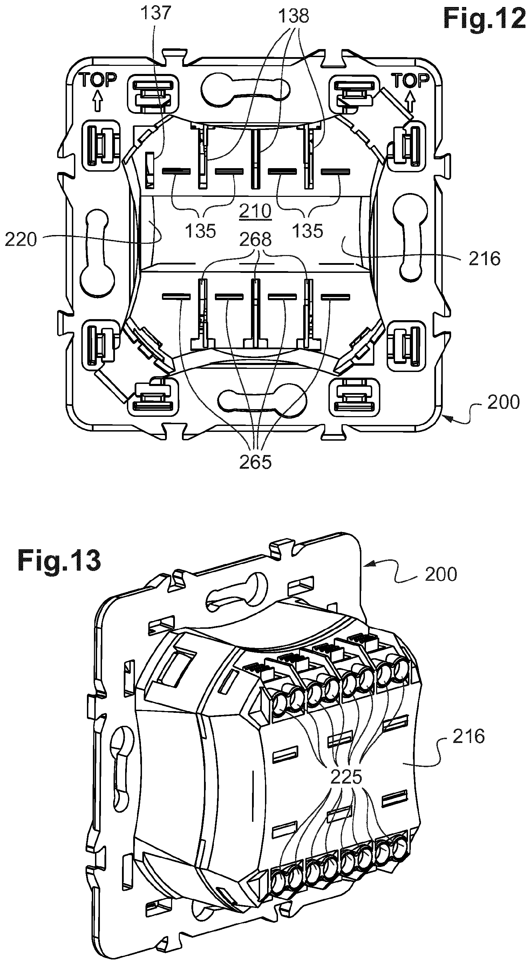

- la figure 12 est une vue schématique avant du support d'appareillage de la figure 11 ;
- la figure 13 est une vue schématique en perspective arrière du support d'appareillage de la figure 11 ; et,

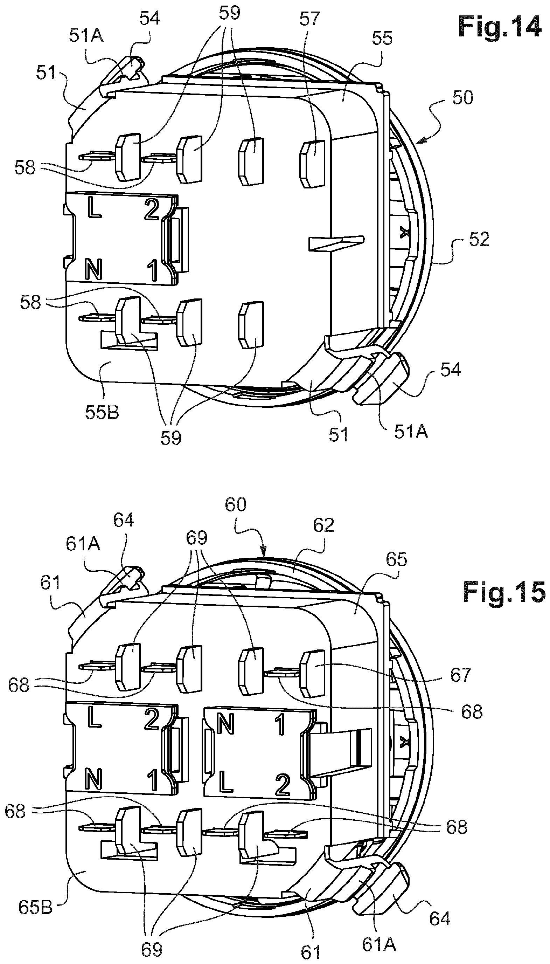

- les figures 14 et 15 sont des vues schématiques arrière d'un cinquième et sixième mécanisme d'appareillage adapté à être monté dans le support d'appareillage de la figure 11.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

Par convention, les termes « avant » et « arrière » seront utilisés par rapport à la direction du regard de l'utilisateur tourné vers l'appareillage électrique monté dans la paroi. Ainsi, l'avant d'un élément désignera le côté de cet élément qui est tourné vers l'utilisateur, et l'arrière désignera le côté opposé.

Les termes « interne » et « externe » seront utilisés en référence au logement du support d'appareillage. Ainsi, une face interne est une face tournée à l'intérieur du logement tandis qu'une face externe est une face tournée à l'extérieur du logement.

Sur les figures 1 à 3, on a représenté, de façon isolée, un premier mode de réalisation d'un support d'appareillage 100 conforme à l'invention. Sur les figures 11 à 13, on a représenté, de façon isolée, un deuxième mode de réalisation d'un support d'appareillage 200 qui sera essentiellement décrit en mettant en lumière ses différences par rapport au premier mode de réalisation.

Sur la figure 5, on a représenté le premier mode de réalisation du support d'appareillage 100, en situation. Ce support d'appareillage 100 est prévu pour se fixer sur une boîte électrique 10 et pour recevoir de manière amovible un mécanisme d'appareillage 20 ; 30 ; 40 ; 70 à connexion automatique par broche de connexion, et une plaque d'habillage 90. Le support d'appareillage 100 et le mécanisme d'appareillage 20 ; 30 ; 40 ; 70 forment ensemble un appareillage électrique 1 conforme à l'invention, la plaque d'habillage 90 étant destinée à recouvrir esthétiquement le support d'appareillage 100 autour de l'enjoliveur 22 ; 32 ; 42 ; 72 du mécanisme d'appareillage 20 ; 30 ; 40 ; 70.

Comme le montre la figure 5, la boîte électrique 10 est ici une boîte d'encastrement à accrocher dans un orifice d'encastrement d'une cloison creuse. Plus précisément, la boîte électrique 10 est ici prévue pour être rapportée dans une paroi murale (non représentée), de telle manière que son ouverture avant affleure la face avant de cette paroi. En variante, la boîte électrique pourrait également être du type à sceller dans une paroi maçonnée ou à fixer en saillie d'une paroi.

Comme le montre la figure 5, la boîte électrique 10 comporte une paroi latérale 15 qui est fermée à l'arrière par une paroi de fond 19. Ici, cette boîte électrique 10 présente une forme cylindrique, mais elle pourrait présenter une forme différente, notamment parallélépipédique.

La boîte électrique 10 présente, dans sa paroi latérale 15 et dans sa paroi de fond 19, des ouvertures de passage 15B initialement obturées par des opercules défonçables ou déchirables, dans lesquelles peuvent être insérés des gaines de cheminement de fils électriques isolés (ou des fibres optiques) provenant d'un réseau électrique.

La paroi latérale 15 de la boîte électrique 10 porte en outre intérieurement deux puits de vissage 11, diamétralement opposés, dans chacun desquels une vis de fixation (non représentée) est vissée pour fixer le support d'appareillage 100 sur la boîte électrique 10.

Comme le montre la figure 5, le support d'appareillage 100 est distinct à la fois de la boîte électrique 10 et du mécanisme d'appareillage 20 ; 30 ; 40 ; 70. Il forme ainsi une pièce intermédiaire entre la boîte électrique 10 et le mécanisme d'appareillage 20 ; 30 ; 40 ; 70. Il sert au montage dudit mécanisme d'appareillage 20 ; 30 ; 40 ; 70 à l'intérieur de ladite boîte électrique 10. Ici, l'ensemble du support d'appareillage 100, excepté les bornes de connexion 140 qu'il reçoit, est réalisé en un matériau isolant de type plastique rigide, par exemple en ABS ou en PC.

Tel que représenté sur les figures 1 à 3, le support d'appareillage 100 comporte un cadre 107 défini entre un bord externe et un bord interne qui délimite une ouverture de montage 115 du mécanisme d'appareillage 20 ; 30 ; 40 ; 70. Le cadre 107 est ici globalement plat et présente une forme carrée formée par quatre branches 101, 102, 103, 104. En variante, sa forme pourrait être quelconque, par exemple globalement circulaire.

Le cadre 107 est muni de moyens de fixation 111, 112, 113, 114 à la boîte électrique 10. Comme le montrent plus précisément les figures 1 et 2, chacune des quatre branches 101, 102, 103, 104 du support d'appareillage 100 présente en son centre un orifice 111, 112, 113, 114 grâce auquel il est possible de rapporter le support 100 sur la boîte électrique 10. Chaque orifice 111, 112, 113, 114 présente ici une forme de trou de serrure, c'est-à-dire avec une majeure partie allongée 111A, 112A, 113A, 114A et une extrémité circulaire 111B, 112B, 113B, 114B (voir figure 1). Pour fixer le support d'appareillage 100 sur la boîte électrique 10, il convient d'enfiler les têtes des deux vis de fixation pré-vissée dans les puits de vissage 11 de la boîte électrique 10, au travers des extrémités circulaires 111B, 112B, 113B, 114B de deux des orifices 111, 112, 113, 114 diamétralement opposés du support, de faire pivoter le support d'appareillage 100 autour de son centre de manière à faire coulisser les parties allongées 111A, 112A, 113A, 114A de ces deux orifices 111, 112, 113, 114 le long des corps filetés des deux vis de fixation, et de visser les deux vis de fixation dans les puits de vissage 11 de sorte que les têtes de ces vis s'appuient sur la face avant du cadre 107 du support d'appareillage 100. Cette opération permet de bloquer fixement le support d'appareillage 100 par rapport à la boîte électrique 10.

Comme le montrent les figures 1 et 2, chaque branche 101, 102, 103, 104 du cadre 107 comporte par ailleurs des fentes 109 propres à permettre l'accrochage de la plaque d'habillage 90. Une fois fixée sur le support d'appareillage 100, la plaque d'habillage 90 cache ce dernier, tout en bordant esthétiquement l'enjoliveur 22 ; 32 ; 42 ; 72 du mécanisme d'appareillage 20 ; 30 ; 40 ; 70 (voir figure 5). Cette plaque d'habillage 90 n'est donc en général encliquetée sur le cadre 107 qu'une fois le mécanisme d'appareillage 20 ; 30 ; 40 ; 70 logé dans le logement 110.

La forme du bord interne du cadre 107 du support d'appareillage 100, qui délimite l'ouverture de montage 115, est prévue pour permettre d'y insérer le socle 25 ; 35 ; 45 ; 75 du mécanisme d'appareillage 20 ; 30 ; 40 équipé de l'enjoliveur 22 ; 32 ; 42 ; 72 (voir figure 9). Ici, comme le montre la figure 1, l'ouverture de montage 115 présente globalement une forme carrée aux côtés incurvés, avec un rayon de courbure tourné vers l'extérieur, et aux angles coupés. Bien entendu, sa forme pourrait être différente, en fonction de la forme du socle du mécanisme d'appareillage et/ ou en fonction de la boîte électrique dans laquelle est monté le mécanisme d'appareillage, et ce afin de garantir le rattrapage angulaire du support d'appareillage.

Comme le montre la figure 1, le bord interne du cadre 107 est prolongé vers l'arrière par une paroi latérale 117 qui délimite un logement 110 de réception dudit mécanisme d'appareillage 20 ; 30 ; 40 ; 70. Cette paroi latérale 117 s'étend vers l'arrière, globalement perpendiculaire au plan moyen du cadre 107.

Ledit logement 110 est fermé à l'arrière par une paroi de fond 116 aménagée pour recevoir au moins trois bornes de connexion 140 électrique logées dans trois compartiments (voir figures 1 et 2). Chaque borne de connexion 140 est destinée à recevoir la broche de connexion 28 ; 48 ; 78 correspondante du mécanisme d'appareillage 20 ; 30 ; 40 ; 70.

De manière remarquable, la paroi de fond 116 ferme intégralement ledit logement 110, seuls des orifices individuels 125 donnent chacun accès, depuis l'extérieur du logement 110, directement à un desdits compartiments pour l'alimentation électrique de la borne de connexion logée dans ce compartiment (voir figure 3), et lesdites bornes de connexion sont enfermées par au moins un capot d'isolation 130 rapporté dans ledit logement 110, capot d'isolation 130 qui comporte des ouvertures individuelles 135 donnant chacune accès, via l'ouverture de montage 115, depuis l'intérieur du logement 110, directement à un des compartiments pour l'introduction d'une broche de connexion 28 ; 48 ; 78 du mécanisme d'appareillage 20 ; 30 ; 40 ; 70 dans la borne de connexion 140 logée dans ledit compartiment (voir figure 1).

Ainsi, la paroi de fond 116 garantit la sécurité de l'utilisateur, qui, une fois le support d'appareillage 100 fixé sur la boîte électrique 10, ne peut plus accéder aux fils d'alimentation électriques arrivant dans la boîte électrique 10, ces derniers étant cachés derrière la paroi de fond 116 du logement 110. Autrement dit, une fois le support d'appareillage 100 connecté aux fils d'alimentation électrique provenant du réseau et monté dans la boîte électrique 10, la paroi de fond 116 fermant le support d'appareillage 100 empêche l'utilisateur d'accéder aux parties actives électriques du support d'appareillage 100. Il n'est ainsi pas possible pour l'utilisateur de modifier le branchement électrique du support d'appareillage 100, ce qui est plus sécuritaire. En outre, l'utilisateur n'a pas accès aux bornes de connexion 140 logées dans le support d'appareillage 100, ces dernières n'étant accessibles que, depuis l'extérieur du support, via les orifices individuels 125, et, depuis l'intérieur, via les ouvertures individuelles 135 du capot d'isolation 130.

Comme le montre la figure 1, la paroi de fond 116 est ici globalement plane et s'étend parallèlement au cadre 107 du support d'appareillage 100, à distance de l'ouverture de montage 115.

En particulier, comme le montrent les figures 2 et 3, la paroi de fond 116 fermant le logement 110 à l'arrière appartient ici à un socle 120 rapporté sur une partie avant 100A de support. Ce socle 120 comporte ladite paroi de fond 116 bordée par une paroi latérale 122 s'étendant vers l'avant. Le bord avant 122A de la paroi latérale 122 du socle 120 est rapporté contre le bord arrière 105B d'une paroi latérale 105 de la partie avant 100A de support qui s'étend à l'arrière du cadre 107 en bordant l'ouverture de montage 115.

Le logement 110 est ainsi délimité, d'une part, latéralement, par la paroi latérale 105 de la partie avant 100A de support et par la paroi latérale 122 du socle 120 qui s'étend dans son prolongement, et, d'autre part, à l'arrière, par la paroi de fond 116 du socle 120. Autrement dit, la paroi latérale 105 de la partie avant 100A et la paroi latérale 122 du socle 120 forment ensemble la paroi latérale 117 du logement 110, tandis que la paroi de fond 116 du socle 120 forme la paroi de fond qui ferme intégralement, à l'arrière, le logement 110 du support d'appareillage 100.

Comme le montre bien la figure 1, le logement 110 du support d'appareillage 100 est quasiment entièrement clos, à l'exception de deux fenêtres 106, diamétralement opposées, prévues dans la paroi latérale 105 de la partie avant 100A de support pour fixer le socle 25 ; 35 ; 45 ; 75 du mécanisme d'appareillage 20 ; 30 ; 40 ; 70 dans ledit logement 110. L'intérieur du logement 110 n'est ainsi accessible que depuis l'avant du support d'appareillage 100, via l'ouverture de montage 115.

Comme le montre la figure 2, la paroi de fond 116 du socle 120 est ici prévue pour accueillir quatre bornes de connexion 140, dans quatre compartiments isolés les uns des autres. Plus précisément, la face interne de la paroi de fond 116 du socle 120 supporte des aménagements matérialisant les compartiments destinés à loger les bornes de connexion 140. Ces aménagements comportent ici cinq cloisons 124 s'étendant, vers l'avant, à partir de la paroi de fond 116, perpendiculairement à cette paroi de fond 116. Les compartiments sont ainsi respectivement délimités, d'une part, latéralement, sur trois côtés sur quatre, par les cloisons 124 et une portion 122P de la paroi latérale 122 du socle 120, et, d'autre part, à l'arrière, par une partie de la paroi de fond 116 du socle 120.

Ici, comme le montrent les figures 2 et 10, chaque borne de connexion 140 est conçue pour être connectée, d'une part, à une des broches de connexion 28 ; 48 ; 78 du mécanisme d'appareillage 20 ; 30 ; 40 ; 70, et, d'autre part, à un fil électrique pour son alimentation par le réseau électrique.

La connexion du mécanisme d'appareillage 20 ; 30 ; 40 ; 70 par broche facilite le branchement électrique dudit mécanisme d'appareillage 20 ; 30 ; 40 ; 70 par l'utilisateur, les bornes de connexion 140 étant par ailleurs alimentées électriquement par le réseau.

Ici, comme le montrent les figures 2 et 10, chaque borne 140 comprend globalement un support conducteur 144 et une lame ressort 146. Plus précisément, le support conducteur 144 est ici formé par repliement d'une lame métallique et comprend, d'une part, une première portion formant un alvéole de connexion 148 destiné à recevoir la broche de connexion 28 ; 48 ; 78 du mécanisme d'appareillage 20 ; 30 ; 40 ; 70, et, d'autre part, une deuxième portion formant une cage conductrice 149 destinée à recevoir l'âme dénudée d'un fil électrique. La cage conductrice 149 est percée de deux trous 147, formant un couple de trous 147, un des deux trous 147 étant destiné à l'introduction dans la cage conductrice 149 de l'extrémité dénudée d'un fil électrique provenant directement du réseau, tandis que l'autre trou 147 est destiné à l'introduction dans la cage conductrice 149 de l'extrémité dénudée d'un fil électrique de repiquage partant vers une borne de connexion d'un autre support d'appareillage du même type et destiné à alimenter électriquement cet autre support. La lame ressort 146 est prévue dans la cage conductrice 149 et destinée à bloquer automatiquement les âmes dénudées ainsi introduites dans cette cage conductrice 149, de manière que ces âmes dénudées soient mises en contact et maintenue contre le métal de la cage conductrice 149.

Ici, comme le montrent les figures 6 à 8, les broches de connexion 28 ; 48 ; 78 des mécanismes d'appareillages 20 ; 40 ; 70 sont plates, et les alvéoles de connexion 148 des bornes de connexion 140 du support d'appareillage 100 présentent une forme complémentaire de lyre pour recevoir les broches plates.

Comme le montre la figure 2, les bornes de connexion 140 sont toutes alignées selon une direction commune de sorte que les alvéoles de connexion 148, qui présentent ici une forme de lyre, de ces bornes de connexion 140 sont également alignés.

Comme le montre la figure 3, les orifices individuels 125 prévus pour donner accès, depuis l'extérieur du support d'appareillage 100, aux compartiments, appartiennent ici à la paroi de fond 116 du socle 120. Plus précisément, une paire d'orifices individuels 125, ici circulaires, débouche dans chaque compartiment. Les bornes de connexion 140 sont positionnées dans les compartiments de sorte que le couple de trous 147 de chacune des bornes de connexion 140 vienne en regard de la paire d'orifices individuels 125 du compartiment dans lequel la borne de connexion 140 est logée.

La dimension des orifices individuels 125 est telle que seuls des fils électriques peuvent y être insérés. En particulier, dans chaque compartiment, un des orifices individuels 125 sert à l'introduction, dans la cage conductrice 149 de la borne de connexion 140, d'un fil d'alimentation électrique provenant du réseau pour alimenter ladite borne de connexion 140, l'autre orifice individuel 125 servant à l'introduction dans ladite cage conductrice 149 d'un fil électrique de repiquage pour alimenter la borne de connexion d'un autre support voisin du même type.

Bien entendu, selon une variante simplifiée du support d'appareillage, on pourrait prévoir que chaque borne de connexion du support ne comporte qu'un seul trou, positionné en regard d'un seul orifice individuel du compartiment dans lequel elle est logée, pour l'introduction d'un unique fil d'alimentation dans la cage conductrice de la borne de connexion.

De manière avantageuse, dans les modes de réalisations représentés, le capot d'isolation 130 est un couvercle rapporté à l'intérieur du logement 110, sur les bornes de connexion 140, de manière à fermer, à l'avant et latéralement, les compartiments (voir figures 1 et 2).

Grâce au capot d'isolation 130, la sécurité de l'utilisateur est garantie car il ne peut pas accéder aux parties actives des bornes de connexion 140.

Plus précisément, comme le montrent les figures 2 et 4, le capot d'isolation 130 présente un profil en forme de « L ». Il comporte une paroi principale 132 s'étendant globalement parallèlement à la paroi de fond 116 du socle 120. Cette paroi principale 132 présente trois bords 133A, 133B, 133C destinés à épouser la face interne 117A de la paroi latérale 117 du logement 110, et un bord libre 133D à partir duquel s'étend, perpendiculairement et vers l'arrière, une paroi secondaire 134. La paroi principale 132 ferme à l'avant les compartiments logeant les bornes de connexion 140, et la paroi secondaire 134 ferme lesdits compartiments sur le dernier côté latéral (voir figure 2).

Comme le montre la figure 2, le socle 120 est aménagé pour recevoir le capot d'isolation 130 de manière que celui-ci enferme et maintienne les bornes de connexion 140 dans les compartiments. Il est en particulier prévu que le capot d'isolation 130 s'emboîte sur le socle 120. Plus précisément, comme le montrent les figures 2 et 4, le bord avant 122A de la paroi latérale 122 du socle 120 comporte un décroché 122C puis s'élargit de manière à former une surface de contact 122B contre laquelle est destinée à s'accoler la face arrière 132B de la paroi principale 132 du capot d'isolation 130. Lorsque le capot d'isolation 130 est ainsi placé sur le socle 120, le décroché 122C du bord avant 122A du socle 120 s'emboîte avec une décroché complémentaire 133E des bords 133B, 133C du capot d'isolation 130. Dans cette position, la face avant 132A de la paroi principale 132 du capot d'isolation 130 s'étend dans le même plan que le bord avant 122A du socle 120.

Pour faciliter la mise en place et le positionnement du capot d'isolation 130 sur le socle 120, il est prévu, sur la paroi de fond 116 du socle 120, des moyens de positionnement du capot d'isolation 130. Comme le montrent les figures 2 et 4, ces moyens de positionnement sont ici formés par certaines des cloisons 124 du socle 120 qui sont prévues pour être introduites dans des couloirs de positionnement s'étendant à l'arrière du capot d'isolation 130. Chaque couloir de positionnement est délimité entre deux murets 139 juxtaposés portés par la face arrière de la paroi principale 132 du capot d'isolation 130.

Comme le montrent les figures 1 et 2, les ouvertures individuelles 135 du capot d'isolation 130 permettent d'accéder à chaque borne de connexion 140. Ces ouvertures individuelles sont plus précisément formées par des fentes 135 traversant de part en part la paroi principale 132 du capot d'isolation 130. Ces fentes 135 s'étendent suivant une même ligne de manière que chaque fente 135 débouche dans la partie «alvéole de connexion 148 » d'une des bornes de connexion 140 logées dans les compartiments.

De manière avantageuse, au moins une des dimensions de chaque fente 135 est inférieure ou égale à 1,2 millimètre. Ainsi, seuls des objets très fins peuvent pénétrer dans les bornes de connexion 140. Autrement dit, les fentes 135 du capot d'isolation 130 prévues pour être traversées par les broches de connexion 28 ; 48 ; 78 plates du mécanisme d'appareillage 20 ; 30 ; 40 ; 70 sont telles qu'elles ne peuvent pas être traversées par un élément présentant deux dimensions supérieures à 1,2mm. Cela est très sécuritaire pour l'utilisateur.

De manière avantageuse, il est prévu sur le support d'appareillage 100 des moyens de jumelage non électriques destinés à coopérer avec des parties du socle 25 ; 35 ; 45 ; 75 isolant du mécanisme d'appareillage 20 ; 30 ; 40 ; 70. Ces moyens de jumelage non électriques garantissent que, lors du montage du socle 25 ; 35 ; 45 ; 75 du mécanisme d'appareillage 20 ; 30 ; 40 ; 70 sur le support d'appareillage 100, les broches de connexion 28 ; 48 ; 78 du mécanisme d'appareillage 20 ; 40 ; 70 qui émergent à l'extérieur du socle 25 ; 35 ; 45 ; 75 sont pré-positionnées le plus précisément possible en face des fentes 135. Ainsi, grâce aux moyens de jumelage non électriques, lorsque le socle 25 ; 35 ; 45 ; 75 est enfoncé davantage dans le support d'appareillage 100, lesdites broches de connexion 28 ; 48 ; 78 s'insèrent au travers des fentes 135 du capot d'isolation 130 pour se connecter correctement dans les bornes de connexion 140 du support d'appareillage 100.

Ces moyens de jumelages sont ici portés par le capot d'isolation 130. Comme le montrent les figures 1 et 2, ils sont formés par trois fentes de jumelage 138 destinées à recevoir trois murets correspondants prévus en saillie du socle 25 ; 35 ; 45 ; 75 du mécanisme d'appareillage 20 ; 30 ; 40 ; 70. Plus précisément, chaque fente de jumelage 138 s'étend ici entre deux fentes 135 du capot d'isolation 130, orthogonalement auxdites fentes 135. Comme le montrent les figures 2 et 4, chaque fente de jumelage 138 est bordée à l'arrière, par les deux murets 139 juxtaposés formant l'un des couloirs de positionnement du capot d'isolation 130 décrits précédemment. En pratique, chaque fente de jumelage 138 débouche, à l'arrière, dans un des couloirs de positionnement du capot d'isolation 130, et est rendue borgne par l'obturation dudit couloir de positionnement lorsque le capot d'isolation 130 est mis en place sur le socle 120 et que la cloison 124 pénètre ledit couloir.

L'assemblage du support d'appareillage 100 est réalisé de la manière suivante. Les bornes de connexion 140 sont rapportées dans les compartiments du socle 120 et le capot d'isolation 130 est placé sur le socle 120 de manière à fermer les compartiments. Ce faisant, les cloisons 124 pénètrent dans les couloirs de positionnement du capot d'isolation 130, de sorte que, d'une part, les bornes de connexion 140 sont triplement isolées les unes des autres, c'est-à-dire isolées par trois parois accolées (les murets 139 et la cloison 124), et, d'autre part, les fentes de jumelage 138 du capot d'isolation 130 sont rendues borgnes (par la cloison 124). Le sous-ensemble formé par le socle 120 et le capot d'isolation 130, est ensuite rapporté sur la paroi latérale 105 de la partie avant 100A de support. Comme le montre la figure 2, pour maintenir solidement le socle 120, le capot d'isolation 130 et la partie avant 100A de support ensemble, il est prévu quatre pattes 105C s'étendant dans le prolongement du bord arrière 105B de la paroi latérale 105, au droit des quatre coins intérieurs du cadre 107 du support d'appareillage 100. Ces pattes 105C sont terminées par des dents 105D d'encliquetage destinées à s'encliqueter dans des fenêtres 123 prévues en correspondance dans la paroi latérale 122 du socle 120. La paroi principale 132 du capot d'isolation 130 comporte deux ouvertures rectangulaires 136 (voir figures 2 et 4) servant au passage de deux desdites pattes 105C en vue de l'encliquetage des dents 105D dans les fenêtres 123 du socle 120. Comme le montre la figure 10, le capot d'isolation 130 est ainsi maintenu en sandwich entre le socle 120 et le bord arrière 105B de la paroi latérale 105 de la partie avant 100A de support, sans pouvoir glisser entre ces deux pièces.

Le support d'appareillage 100 est connecté aux fils d'alimentation électrique du réseau électrique par l'introduction de l'âme dénudée de chaque fil électrique (de neutre, de phase et de terre notamment) dans la cage conductrice 149 de la borne de connexion 140 correspondante, via un des orifices individuels 125 associé au compartiment logeant ladite borne de connexion 140 (voir figure 3). L'âme dénudée de chaque fil électrique est maintenue dans la cage conductrice de la borne de connexion 140 correspondante par la lame ressort 146 de cette borne (voir figure 10). L'âme dénudée du fil électrique peut être libérée de l'emprise de la lame ressort 146 en actionnant, par pression, la poussette 126 située au dessus des deux orifices individuels 125 associés audit compartiment (voir figures 3 et 10), qui permet d'écarter ladite lame ressort 146 de la cage conductrice 149.

Il faut ensuite fixer le support d'appareillage 100 sur la boîte électrique 10, comme il a été expliqué précédemment, via les vis de fixation de la boîte électrique 10 et deux orifices 111, 112, 113, 114 diamétralement opposés du cadre 107 du support d'appareillage 100.

Le premier mode de réalisation du support d'appareillage 100 ainsi formé est adapté à recevoir comme mécanisme d'appareillage 20 ; 30 ; 40 ; 70 un mécanisme de puissance. Notamment, il peut accueillir un mécanisme de prise de courant 20 ; 30, un mécanisme de prise USB 40, ou un mécanisme de prise de courant 70 commandable et/ou connecté.

Comme le montrent les figures 5 à 10, un tel mécanisme d'appareillage 20 ; 30 ; 40 ; 70 comprend, de manière générale, un socle 25 ; 35 ; 45 ; 75 en matériau isolant formant un boîtier logeant les composants électriques du mécanisme d'appareillage 20 ; 30 ; 40 ; 70, et un enjoliveur 22 ; 32 ; 42 ; 72 donnant sa fonction électrique au mécanisme d'appareillage 20 ; 30 ; 40 ; 70. Ici, comme on le voit sur la figure 5, l'enjoliveur 22 ; 32 ; 72 des mécanismes de prise de courant 20 ; 30 ; 70 comporte un puits de réception 22A ; 32A ; 72A pour accueillir une fiche électrique, tandis que l'enjoliveur 42 du mécanisme de prise USB 40 comporte deux puits de réception 42A de connecteurs USB.

Les mécanismes de prise de courant 20 ; 30 sont en tout point identiques si ce n'est que le puits de réception de la fiche électrique de l'un de ces mécanismes d'appareillage 20 présente un piston mobile 23 affleurant la face avant 22A de l'enjoliveur 22 lorsque la prise est inutilisée. Ce piston mobile 23 est repoussé vers l'arrière lorsqu'une fiche est connectée dans la prise de courant 20 (voir figure 5).

Le mécanisme de prise de courant 70 commandable et/ou connecté est très similaire aux mécanismes de prise de courant 20 ; 30 classiques si ce n'est qu'il est accessible à distance, par exemple via internet ou via un émetteur local infrarouge ou radio par exemple. Un tel mécanisme de prise de courant 70 peut notamment être commandé par un utilisateur qui n'est pas physiquement à proximité de la prise.

Quel que soit le mécanisme d'appareillage 20 ; 30 ; 40 ; 70 envisagé, le socle 25 ; 35 ; 45 ; 75 est conçu pour une connexion simple et rapide dudit mécanisme d'appareillage 20 ; 30 ; 40 ; 70 dans le support d'appareillage 100.

Comme le montrent plus précisément les figures 6, 7, 8 et 10, la paroi de fond 25B ; 45B ; 75B du socle 25 ; 45 ; 75 est globalement plane avec une excroissance 26 ; 46 ; 76 qui délimite intérieurement un logement dans lequel sont logés les composants électriques du mécanisme de prise de courant 20 ; 70 ou de prise USB 40. Les broches de connexion 28 ; 48 ; 78 du mécanisme d'appareillage 20 ; 40 ; 70 sont connectées à ces composants électriques et traversent la partie plane de la paroi de fond 25B ; 45B ; 75B du socle 25 ; 45 ; 75 de manière à faire saillie à l'arrière du socle 25 ; 45 ; 75, orthogonalement à ladite paroi de fond 25B ; 45B ; 75B. Ici, comme le montrent les figures 6 à 8, les broches de connexion 28 ; 48 ; 78 sont plates et s'étendent selon une même ligne.

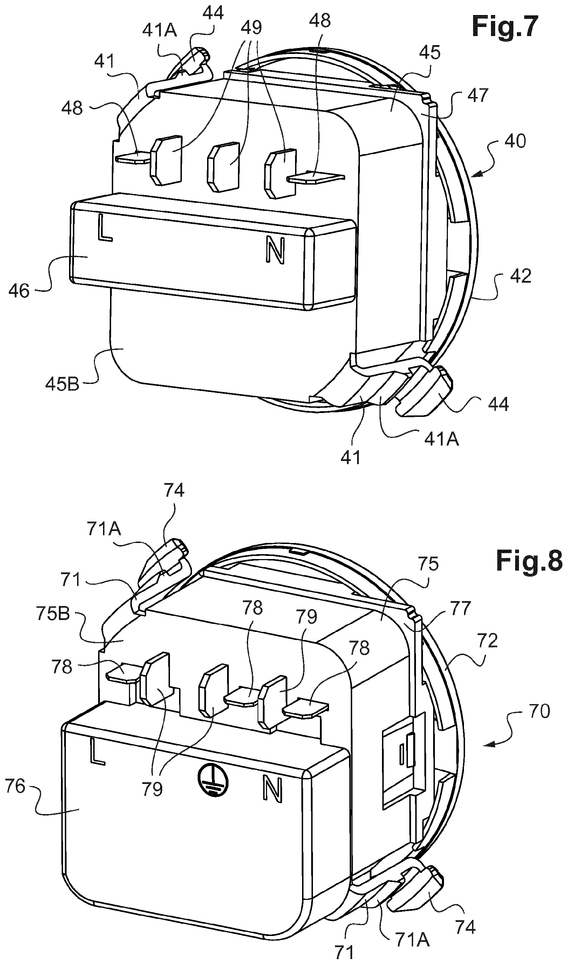

Comme on le voit sur les figures 6 et 8, le mécanisme de prise de courant 20 ; 70 comporte notamment une broche de connexion 28 ; 78 destinée à connecter une borne de phase, repérée par le symbole « L », une broche de connexion 28 ; 78 destinée à connecter une borne de neutre, repérée par le symbole « N », et une broche de connexion 28 ; 78 destinée à connecter une borne de terre repérée par le symbole de terre. Comme on le voit sur la figure 7, le mécanisme de prise USB 40 comporte seulement une broche de connexion 48 destinée à connecter une borne de phase, repérée par le symbole « L », une broche de connexion 48 destinée à connecter une borne de neutre, repérée par le symbole « N ».

Avantageusement, la position des broches de connexion 28 ; 48 ; 78 de phase et de neutre sur le socle 25 ; 45 ; 75 des mécanismes de prise de courant 20 ; 30 ; 70 et de prise USB 40 est identique, de sorte que ces mécanismes peuvent être connectés dans un même support d'appareillage 100.

Comme le montrent les figures 6 à 8, la paroi de fond 25B ; 45B ; 75B du socle 25 ; 45 ; 75 du mécanisme d'appareillage 20 ; 40 ; 70 porte par ailleurs, en saillie de sa face arrière, des murets 29 ; 49 ; 79 qui s'étendent entre les broches de connexion 28 ; 48 ; 78, orthogonalement à ladite paroi de fond 25B ; 45B ; 75B. Plus précisément, la paroi de fond 25B ; 45B ; 75B porte ici trois murets 29 ; 49 ; 79 permettant d'isoler les broches de connexion 28 ; 48 ; 78 les unes des autres. Ces muret 29 ; 49 ; 79 forment aussi les moyens de jumelage complémentaires destinés à s'emboîter dans les fentes de jumelages 138 borgnes du capot d'isolation 130. Les murets 29 ; 49 ; 79 facilitent notamment le bon positionnement du mécanisme de prise de courant 20 ; 30 ; 70 ou de prise USB 40 dans le support d'appareillage 100, sans risquer de tordre les broches de connexion 28 ; 48 ; 78 lors de l'insertion desdites broches de connexion 28 ; 48 ; 78 dans les alvéoles de connexion 148 des bornes de connexion 140 du support d'appareillage 100, via les fentes 135 du capot d'isolation 130.

Comme le montrent les figures 5 à 7, quel que soit le mécanisme d'appareillage 20 ; 30 ; 40 ; 70 envisagé, le socle 25 ; 35 ; 45 ; 75 dudit mécanisme d'appareillage 20 ; 30 ; 40 ; 70 comporte par ailleurs deux pattes flexibles 21 ; 31 ; 41 ; 71 diamétralement opposées, destinées à la fixation du socle 25 ; 35 ; 45 ; 75 du mécanisme d'appareillage 20 ; 30 ; 40 ; 70 sur le support d'appareillage 100.

Comme le montrent les figures 6 à 8, les pattes flexibles 21 ; 41 ; 71 s'étendent à partir de la paroi de fond 25B ; 45B ; 75B du socle 25 ; 45 ; 75, vers l'avant, et par l'extérieur dudit socle 25 ; 45 ; 75.

Comme le montent les figures 5 à 8, l'extrémité avant libre des pattes flexibles 21 ; 31 ; 41 ; 71 est terminée par un moyen de préhension, ici sous forme de languette de préhension 24 ; 34 ; 44 ; 74, accessible à proximité de l'enjoliveur 22 ; 32 ; 42 ; 72. Une dent de fixation 21A ; 31A ; 41A ; 71A fait saillie de la face externe de la patte flexible 21 ; 31 ; 41 ; 71. La dent de fixation 21A ; 31A ; 41A ; 71A de chaque patte flexible 21 ; 31 ; 41 ; 71 est destinée à s'encliqueter dans une des fenêtres 106 prévues dans la paroi latérale 105 du support d'appareillage 100.

Comme le montrent les figures 3 et 9, chaque dent de fixation 21A comporte, d'une part, une surface d'accroche, à l'avant, parallèle au bord avant 106A de la fenêtre 106 du support d'appareillage 100, et, d'autre part, une surface inclinée, à l'arrière, destinée à glisser contre la face interne de la paroi latérale 117 du logement 110 lors de l'insertion du socle 25 du mécanisme d'appareillage 20 dans ledit logement 110 du support d'appareillage 100.

Plus précisément, lors de l'insertion du socle 25 du mécanisme d'appareillage 20 dans le logement 110 du support d'appareillage 100, la surface arrière inclinée de la dent de fixation 21A entre en contact avec la paroi latérale 117 du logement 110 ce qui a pour effet de rétracter les pattes flexibles 21 l'une vers l'autre, vers le centre du mécanisme d'appareillage 20, de sorte que le socle 25 dudit mécanisme peut glisser en direction du fond du logement 110, jusqu'à ce que les dents de fixation 21A débouchent dans les fenêtres 106. Lorsque chaque dent de fixation 21A pénètre dans une des fenêtres 106, la patte flexible 21 qui la porte revient élastiquement à sa position initiale non rétractée. Dans cette position, comme le montre la figure 9, la surface d'accroche de la dent de fixation 21A est parallèle au bord avant 106A de la fenêtre 106, tous deux perpendiculaires à la direction d'insertion ou de retrait du socle 25 du mécanisme d'appareillage 20 dans ou hors du support d'appareillage 100. La surface d'accroche de la dent de fixation 21A, parallèle au bord avant 106A de la fenêtre 106 et accolée à ce dernier, forme ainsi un moyen de retenue du mécanisme d'appareillage vers l'avant. Il est en effet ainsi impossible que le mécanisme d'appareillage 20 se désolidarise du support d'appareillage 100 en condition normale d'utilisation de l'appareillage électrique 1, par exemple lorsque la fiche électrique est retirée du mécanisme de prise de courant 20. Autrement dit, la dent de fixation 21A, insérée dans la fenêtre 106, venant en prise avec le bord avant 106A de ladite fenêtre 106 empêche la séparation involontaire du mécanisme d'appareillage 20 et du support d'appareillage 100, lors d'une traction vers l'avant exercée sur le mécanisme d'appareillage 20.

Comme le montrent les figures 5 à 8 et 10, le socle 25 ; 35 ; 45 ; 75 du mécanisme d'appareillage 20 ; 30 ; 40 ; 70 comporte, dans une partie avant, un trottoir 27 ; 37 ; 47 ; 77, destiné à venir s'appuyer contre une surface de butée 108 du support d'appareillage 100 (voir figure 1), ladite surface de butée 108 étant prévue en retrait du cadre 107 dudit support d'appareillage 100. Ce trottoir 27 ; 37 ; 47 ; 77 du mécanisme d'appareillage 20 ; 30 ; 40 ; 70 et la surface de butée 108 correspondante du support d'appareillage 100 forment ensemble un moyen de retenue vers l'arrière dudit mécanisme d'appareillage 20 ; 30 ; 40 ; 70, qui empêche que le mécanisme d'appareillage 20 ; 30 ; 40 ; 70 ne s'enfonce dans la boîte électrique 10, lors d'une poussée vers l'arrière exercée sur le mécanisme d'appareillage 20 ; 30 ; 40 ; 70, par exemple lors de l'insertion d'une fiche électrique dans la prise de courant 20 ; 30 ; 70.

Pour connecter électriquement le mécanisme d'appareillage 20 ; 30 ; 40 ; 70 au réseau électrique, il suffit d'introduire ledit mécanisme d'appareillage 20 ; 30 ; 40 ; 70 à travers l'ouverture de montage 115 du support d'appareillage 100 alimenté électriquement et installé dans la boîte électrique 10, de manière à faire se correspondre les broches de connexion 28 ; 48 ; 78 avec les fentes 135 du capot d'isolation 130 et de pousser jusqu'à entendre un « clic » sonore indiquant que la dent de fixation 21A ; 31A ; 41A ; 71A de chaque patte flexible 21 ; 31 ; 41 ; 71 a pénétré la fenêtre 106 correspondante du support d'appareillage 100. Comme le montre la figure 10, la broche de connexion 28 correspondante du mécanisme d'appareillage 20 est ainsi prise en sandwich dans la lyre de la borne de connexion 140 correspondante. Le mécanisme d'appareillage 20 ; 30 ; 40 ; 70 devient ainsi opérationnel dès lors qu'il est introduit dans le logement 110. Sa connexion dans le support d'appareillage 100 est très simple et se fait sans nécessiter d'outils.

Tel que cela est représenté sur les figures 9 et 10, le mécanisme d'appareillage 20 est alors fixé de manière indémontable sur le support d'appareillage 100 sans l'intervention humaine de l'utilisateur.

De manière avantageuse, le mécanisme d'appareillage 20 ; 30 ; 40 ; 70 est néanmoins retirable dudit logement 110 de réception du support d'appareillage 100 grâce aux languettes de préhension 24 ; 34 ; 44 ; 74 du socle 25 ; 35 ; 45 ; 75.

Plus précisément, comme le montre la figure 9, pour désolidariser le mécanisme d'appareillage 20 du support d'appareillage 100, l'utilisateur retire la plaque d'habillage 90 pour avoir accès aux languettes de préhension 24 s'étendant à proximité du bord interne du cadre 107 du support d'appareillage 100. L'utilisateur rapproche alors les pattes flexibles 21 l'une vers l'autre en pinçant les languettes de préhension 24 vers le centre du mécanisme d'appareillage 20. Cela a pour effet de libérer la surface d'accroche des dents de fixation 21A du bord avant 106A des fenêtres 106 du support d'appareillage 100, de sorte qu'il est possible de tirer vers l'avant pour extraire le mécanisme d'appareillage 20 du support d'appareillage 100. Un autre mécanisme d'appareillage 30 ; 40 ; 70 peut alors être inséré dans le support d'appareillage 100 en lieu et place du précédent, en toute simplicité comme expliqué précédemment. Ainsi, sans avoir à modifier la connexion électrique, à l'arrière du support d'appareillage 100, le nouveau mécanisme d'appareillage 30 ; 40 ; 70 sera automatiquement opérationnel, ses broches de connexion 48 ; 78 étant conçues pour émerger du socle 35 ; 45 ; 75, et faire saillie de la face arrière dudit socle 35 ; 45 ; 75 à l'endroit adéquat pour connecter le courant souhaité (phase, neutre ou terre) via la borne de connexion 140 correspondante du support d'appareillage 100.

Le deuxième mode de réalisation du support d'appareillage 200 représenté sur les figures 11 à 13 est en tout point similaire au premier mode, si c'est n'est que la paroi de fond 216 du logement 210 de ce support d'appareillage 200 est aménagée pour pouvoir recevoir huit bornes de connexion 240.

Un tel support d'appareillage 200 est particulièrement adapté pour recevoir un mécanisme d'appareillage 50 ; 60 de commutation, tel qu'un mécanisme d'interrupteur simple 50, ou un mécanisme d'interrupteur double 60. Selon une variante non représentée, ce support d'appareillage peut recevoir un interrupteur électronique et/ou un interrupteur connecté et commandable à distance. En pratique, il convient de noter que les mécanismes d'interrupteur simple ou double décrits ici peuvent respectivement être utilisés en tant que « commutateur » ou en tant que « va-et-vient » simple ou double.

Comme le montrent les figures 12 et 13, le logement 210 du support d'appareillage 200 est intégralement fermé à l'arrière par une paroi de fond formée par la paroi de fond 216 d'un socle 220 rapporté sur une partie avant 100A de support. La partie avant 100A sur laquelle le socle 220 est rapporté est identique à celle décrite pour le premier mode de réalisation du support d'appareillage 100. En revanche, le socle 220 accueille non pas quatre mais huit bornes de connexion 240, dans huit compartiments agencés selon deux lignes de quatre compartiments.

Comme le montre la figure 11, les huit bornes de connexion 240 sont identiques aux bornes de connexion 140 du premier mode de réalisation. Les quatre bornes de connexion 240 d'une même ligne sont agencées de manière que leur lyre soit alignée. Les huit bornes de connexion 240 sont enfermées par deux capots d'isolation 130, 260 distincts rapportés sur la paroi de fond 216.

Comme le montre la figure 11, le socle 220 du support d'appareillage 200 présente une structure très proche du socle 120 du premier mode de réalisation du support 100, mais il peut accueillir les huit bornes de connexion 240, et les deux capots d'isolation 130, 260. Pour ce faire, le socle 220 est globalement symétrique par rapport à un plan transversal P passant par le centre dudit socle 220 et s'étendant parallèlement aux lignes de bornes de connexion 240. Le socle 220 comporte dix cloisons 224 s'étendant, vers l'avant, à partir de la paroi de fond 216, perpendiculairement à cette paroi de fond 216, de part et d'autre du plan transversal P de symétrie.

Plus précisément, de manière analogue à ce qui a été décrit pour le premier mode de réalisation du support d'appareillage 100, les bornes de connexion 240 sont logées dans des compartiments isolés les uns des autres, prévus sur la paroi de fond 216 du socle 220. Comme le montre la figure 11, les compartiments de chaque ligne sont respectivement délimités, d'une part, latéralement, sur trois côtés sur quatre, par cinq des dix cloisons 224 et une portion 222P de la paroi latérale 222 du socle 220, et, d'autre part, à l'arrière, par une partie de la paroi de fond 216 du socle 220.

Comme le montre la figure 13, comme pour le premier mode de réalisation, il est prévu dans le fond de chaque compartiment deux orifices individuels 225, l'un adapté à recevoir un fil d'alimentation électrique provenant du réseau et permettant d'alimenter électriquement la borne de connexion 240 logée dans le compartiment, l'autre adapté à recevoir un fil électrique de repiquage.

Comme le montre la figure 11, chaque capot d'isolation 130, 260 est rapporté sur une ligne de bornes de connexion 240 de manière à fermer, par l'avant et latéralement, cette ligne de compartiments. Un de ces capots d'isolation correspond au capot d'isolation 130 du premier mode de réalisation tandis que l'autre capot d'isolation 260 est très légèrement différent du capot d'isolation 130 du premier mode de réalisation. Les deux capots d'isolation 130, 260 se différencient uniquement par une ouverture rectangulaire 137 présente sur le premier capot d'isolation 130 et non sur le deuxième capot d'isolation 260.

Comme le montrent les figures 11 et 12, l'ouverture rectangulaire se présente sous la forme d'une fente supplémentaire 137, parallèle aux fentes de jumelage 138 borgnes du capot d'isolation 130. Cette fente supplémentaire 137 sert de moyen de détrompage dans le sens où elle est adaptée à coopérer avec un moyen de détrompage complémentaire porté par le socle 55 ; 65 du mécanisme d'appareillage 50 ; 60 pour assurer la connexion du mécanisme d'appareillage 50 ; 60 dans le bon sens par rapport au support d'appareillage 200, ce qui garantit que les broches de connexion 58 ; 68 s'insèrent dans les bornes de connexion 240 adéquates. Cette fente supplémentaire 137 est distincte desdites fentes 135 d'accès aux bornes de connexion 240.

Comme le montrent les figures 14 et 15, les mécanismes d'interrupteur 50 ; 60 comprennent, de manière générale, un socle 55 ; 65 en matériau isolant formant un boîtier logeant les composants électriques du mécanisme d'interrupteur 50 ; 60, et un enjoliveur 52 ; 62 donnant sa fonction électrique au mécanisme. Ici, l'enjoliveur 52 du mécanisme d'interrupteur simple 50 comporte une touche d'actionnement de l'interrupteur, tandis que l'enjoliveur 62 du mécanisme d'interrupteur double 60 comporte deux touches d'actionnement.

Comme le montrent les figures 14 et 15, le socle 55 ; 65 dudit mécanisme d'interrupteur 50 ; 60 comporte les mêmes pattes flexibles 51 ; 61, comprenant chacune une dent de fixation 51A ; 61A et une languette de préhension 54 ; 64, que les pattes flexibles 21 ; 31 ; 41 des mécanismes de prise de courant 20 ; 30 et de prise USB 40 décrits précédemment.

Sur les figures 14 et 15, on voit aussi que la paroi de fond 55B ; 65B du socle 55 ; 65 est globalement plane. Emergent de la face arrière de cette paroi de fond 55B 65B les broches de connexion 58 ; 68 électrique reliées aux composants électriques du mécanisme d'appareillage 50 ; 60. Ces broches de connexion 58 ; 68 s'étendent sur deux lignes parallèles.

Comme le montrent les figures 14 et 15, la paroi de fond 55B ; 65B du socle 55 ; 65 du mécanisme d'appareillage 20 ; 40 porte par ailleurs, en saillie de sa face arrière, des murets 59, 57 ; 69, 67 qui s'étendent entre les broches de connexion 58 ; 68, orthogonalement à ladite face arrière. Les murets 59, 57 ; 69, 67 permettent d'isoler les broches de connexion 58 ; 68 les unes des autres.

L'ensemble de ces murets 59, 57 ; 69, 67 forment aussi les moyens de jumelage complémentaires destinés à s'emboîter dans les fentes de jumelage 138, 268 des deux capots d'isolation 130, 260 et dans la fente supplémentaire 137 prévue dans le premier capot d'isolation 130 (voir figures 11 et 12).

Le quatrième muret 57 ; 67, disposé à l'extrémité d'une des lignes de broches de connexion 58 ; 68 forme un muret de détrompage complémentaire qui assure la fixation du socle 55 ; 65 du mécanisme d'appareillage 50 ; 60 dans le support d'appareillage 200, dans le bon sens. Cela garantit la connexion correcte des broches de connexion 58 ; 68 dans les bornes de connexion 240 adéquates du support d'appareillage 200, via les fentes 135, 265 (voir figure 12).

Quel que soit le mode de réalisation du support d'appareillage 100, 200, on comprend à la lumière de la description qu'il convient de câbler le support d'appareillage 100, 200, lors de son montage dans la boîte électrique 10, de manière convenable pour alimenter les bornes de connexion 140, 240 avec le courant de phase, de neutre, de terre, ou encore de repiquage, qu'elles doivent recevoir. Un installateur saura notamment comment connecter correctement le support d'appareillage 100 ; 200 en fonction de s'il est destiné à recevoir un mécanisme de puissance 20 ; 30 ; 40 ou un mécanisme de commutation 50 ; 60.

Ensuite, il suffit à l'utilisateur non spécialisé de monter/démonter par clippage/déclippage le socle 25 ; 35 ; 45 ; 55 ; 65 du mécanisme d'appareillage 20 ; 30 ; 40 ; 50 ; 60 souhaité dans ledit support d'appareillage 100, 200 en veillant simplement à connecter dans le premier mode de réalisation du support d'appareillage 100 les mécanismes d'appareillage 20 ; 30 ; 40 de puissance et dans le deuxième mode de réalisation du support d'appareillage 200 les mécanismes d'appareillage 50 ; 60 de commutation.

Ainsi, il est possible de connecter différents mécanismes d'appareillage dans les supports d'appareillage 100 ; 200 selon l'invention, sans que l'utilisateur n'ait à modifier le branchement électrique de ces supports d'appareillage 100 ; 200. Autrement dit, grâce au support d'appareillage 100 ; 200, l'appareillage électrique 1 est modulable à fonction interchangeable, en toute sécurité.

L'invention n'est nullement limitée aux modes de réalisation décrits et représentés.

Notamment, il est envisageable que les compartiments soient rapportés sur la paroi de fond du logement, au lieu d'être prévus sur cette paroi de fond. Les compartiments pourraient notamment appartenir au capot d'isolation.

En variante, il est envisageable de prévoir de rapporter un capot d'isolation par borne de connexion, au lieu d'un capot d'isolation par ligne de bornes de connexion.

En variante encore, il est envisageable de prévoir que le capot d'isolation soit formé par l'enveloppe isolante d'un bloc bornier de connexion indépendant, rapporté dans le fond du logement du support d'appareillage. La paroi avant isolante d'un tel bloc bornier est munie des ouvertures individuelles débouchant dans les bornes de connexion depuis l'intérieur du logement, et sa paroi arrière isolante est pourvue d'orifices individuels débouchant dans les bornes de connexion depuis l'extérieur du logement. La paroi de fond du logement comporte alors des moyens de réception de ce bloc bornier, jouant aussi le rôle de moyens de positionnement du bloc bornier. Il peut notamment s'agir de moyens de clippage du bloc bornier dans le fond du logement.

Selon cette variante, la paroi arrière du bloc bornier peut venir compléter la paroi arrière du reste du support d'appareillage, de sorte qu'une fois le bloc bornier en place, le logement est bien intégralement clos à l'arrière par une paroi de fond formée par lesdites parois arrière du bloc bornier et du reste du support.

En variante, les formes des broches de connexion et des bornes de connexion pourraient être autres, tant qu'elles sont compatibles entre elles. On pourrait notamment prévoir des broches cylindriques plutôt que plates. Dans ce cas, les alvéoles de connexion des bornes de connexion du support d'appareillage présentent une forme complémentaire adaptée. Plus précisément, chaque alvéole de connexion est dans ce cas délimité par deux languettes repliées l'une vers l'autre en formant deux épingles à cheveux. Les deux languettes agissent comme la mâchoire d'une pince pour serrer la broche cylindrique introduite dans ledit alvéole. Les ouvertures individuelles du capot d'isolation, à travers lesquelles s'insèrent lesdites broches de connexion jusque dans les bornes de connexion du support, sont alors en forme de trous circulaires. Au moins une des dimensions, en particulier le diamètre du trou, de chaque ouverture individuelle de chaque capot d'isolation est alors inférieure ou égale à 3,2 millimètre.

Il est aussi envisageable de prévoir un mécanisme comportant à la fois des broches de connexion plates et des broches de connexion cylindriques. Dans ce cas, les alvéoles de connexion des bornes sont alors de formes complémentaires adaptées à chaque broche, c'est-à-dire soit en forme de lyre, soit en forme de mâchoire de pince.

Les moyens de détrompage peuvent être portés directement par la paroi de fond du logement, pas nécessairement par le capot.

En variante, la paroi de fond du support d'appareillage pourrait être d'un seul tenant avec la partie avant de support, au lieu d'appartenir à un socle rapporté contre une partie avant de support, de sorte que le logement serait alors délimité par une seule pièce. Seul le capot d'isolation serait dans ce cas rapporté sur les bornes de connexion, directement dans le logement.

D'autres mécanismes de commutation peuvent être reçus dans le deuxième mode de réalisation du support d'appareillage. Par exemple, il est envisageable d'y connecter des mécanismes d'interrupteur sans courant de neutre, des mécanismes de détecteur, des mécanismes d'interrupteur électronique, commandables à distance.

Il est aussi envisageable d'y installer des mécanismes d'appareillage de puissance tels que ceux décrits précédemment. Pour ce faire, il faut cependant noter que le support d'appareillage comportant huit bornes de connexion sera alors câblé par l'installateur spécifiquement en puissance. Une fois ainsi câblé, il ne pourra plus recevoir les mécanismes de commutation précédemment décrits, à moins de modifier le câblage du support d'appareillage, à l'arrière, ce qui nécessite de démonter le support d'appareillage et ne peut pas être réalisé par un utilisateur non spécialisé. Selon cette variante, il est prévu de munir le socle des mécanismes de prise de courant et de prise USB précédemment décrit d'un muret de détrompage analogue à celui décrit pour les mécanismes d'interrupteur afin de garantir la bonne connexion dudit mécanisme dans ledit support d'appareillage.

## Revendications

1. Support d'appareillage (100 ; 200) comportant un cadre (107) muni de moyens de fixation (111, 112, 113, 114) à une boîte électrique, ce cadre (107) présentant un bord interne qui délimite une ouverture de montage (115) d'un mécanisme d'appareillage (20 ; 30 ; 40 ; 50 ; 60), ce bord interne étant prolongé vers l'arrière par une paroi latérale (117) qui délimite un logement (110 ; 210) de réception dudit mécanisme d'appareillage (20 ; 30 ; 40 ; 50 ; 60 ; 70), ledit logement (110 ; 210) étant fermé à l'arrière par une paroi de fond (116 ; 216) qui ferme intégralement ledit logement (110 ; 210),
dans lequel ladite paroi de fond (116 ; 216) est aménagée pour recevoir au moins trois bornes de connexion (140 ; 240) électrique logées dans trois compartiments isolés les uns des autres, lesdits compartiments étant délimités par des cloisons (124 ; 224) en matériau isolant placées sur une face interne de la paroi de fond (116 ; 216),
dans lequel sont prévus des orifices individuels (125 ; 225) donnant chacun accès, depuis l'extérieur du logement (110 ; 210), directement à un desdits compartiments pour l'alimentation électrique de la borne de connexion (140 ; 240) logée dans ledit compartiment,
ledit support d'appareillage comportant en outre au moins un capot d'isolation (130 ; 130, 260) configuré pour être rapporté dans ledit logement (110 ; 210), et pour enfermer lesdites bornes de connexion (140 ; 240) et qui comporte des ouvertures individuelles (135 ; 135, 265) configurées pour donner chacune accès, via l'ouverture de montage (115) depuis l'intérieur du logement (110 ; 210), directement à un des compartiments pour l'introduction d'une broche de connexion (28 ; 48 ; 58 ; 68 ; 78) du mécanisme d'appareillage (20 ; 30 ; 40 ; 50 ; 60 ; 70) dans la borne de connexion (140 ; 240) logée dans ledit compartiment.

2. Support d'appareillage selon la revendication 1, dans lequel au moins une des dimensions de chaque ouverture individuelle de chaque capot d'isolation est inférieure ou égale à 3,2 millimètre.

3. Support d'appareillage (100 ; 200) selon la revendication 1, dans lequel au moins une des dimensions de chaque ouverture individuelle (135 ; 135, 265) de chaque capot d'isolation (130 ; 130, 260) est inférieure ou égale à 1,2 millimètre.

4. Support d'appareillage selon l'une des revendications 1 à 3, dans lequel les orifices individuels (125 ; 225) appartiennent à la paroi de fond (116 ; 216).

5. Support d'appareillage (100 ; 200) selon la revendication 3, dans lequel chaque capot d'isolation (130 ; 130, 260) est un couvercle rapporté à l'intérieur du logement (110 ; 210), qui recouvre lesdites cloisons (124 ; 224) pour fermer lesdits compartiments.

6. Support d'appareillage (100 ; 200) selon l'une des revendications 1 à 5, dans lequel il est prévu sur la paroi de fond (116 ; 216) des moyens de positionnement (124 ; 224) du capot d'isolation (130 ; 130, 260).

7. Support d'appareillage (100 ; 200) selon l'une des revendications 1 à 6, dans lequel il est prévu des moyens de jumelage non électriques (138 ; 138, 268) destinés à coopérer avec ledit mécanisme d'appareillage (20 ; 30 ; 40 ; 50 ; 60 ; 70).

8. Support d'appareillage (100 ; 200) selon la revendication 7, dans lequel les moyens de jumelage non électriques sont portés par chaque capot d'isolation (130 ; 130, 260).

9. Support d'appareillage (200) selon l'une des revendications 1 à 8, dans lequel ladite paroi de fond (216) est aménagée pour recevoir huit bornes de connexion (240) logées dans huit compartiments, suivant deux lignes de quatre compartiments.

10. Support d'appareillage (200) selon la revendication 9, dans lequel il est prévu deux capots d'isolation (130, 260) rapportés dans ledit logement (210) et enfermant chacun quatre bornes de connexion (240).

11. Support d'appareillage (200) selon l'une des revendications 9 et 10, dans lequel il est prévu au moins un moyen de détrompage (137) adaptés à coopérer avec ledit mécanisme d'appareillage (50 ; 60).

12. Support d'appareillage (200) selon la revendication 11, dans lequel ledit moyen de détrompage (137) est porté par un seul des deux capots d'isolation (130).

13. Support d'appareillage (200) selon la revendication 12, dans lequel ledit moyen de détrompage (137) est distinct desdites ouvertures individuelles (135) d'accès aux bornes de connexion (240).

14. Support d'appareillage (200) selon l'une des revendications 12 et 13, dans lequel ledit moyen de détrompage (137) du capot d'isolation (130) est une fente.

15. Appareillage électrique (1) comportant un support d'appareillage (100 ; 200) selon l'une des revendications 1 à 14 et un mécanisme d'appareillage (20 ; 30 ; 40 ; 50 ; 60 ; 70) fixé dans ledit logement (110 ; 210) de manière amovible.

## Patentansprüche

1. Gerätehalterung (100; 200) mit einem mit Mitteln (111, 112, 113, 114) zum Befestigen an einer elektrischen Dose versehenen Rahmen (107), wobei der Rahmen (107) einen inneren Rand aufweist, der eine Öffnung (115) für die Montage eines Gerätemechanismus (20; 30; 40; 50; 60) begrenzt, wobei der innere Rand nach hinten durch eine Seitenwand (117) verlängert ist, die einen Raum (110; 210) für die Aufnahme des Gerätemechanismus (20; 30; 40; 50; 60; 70) begrenzt,
wobei der Raum (110; 210) hinten durch eine Bodenwand (116; 216) abgeschlossen ist, die den Raum (110; 210) vollständig abschließt,
wobei die Bodenwand (116; 216) dazu ausgelegt ist, wenigstens drei in drei voneinander isolierten Abteilungen untergebrachte elektrische Anschlußklemmen (140; 240) aufzunehmen, wobei die Abteilungen durch auf einer Innenseite der Bodenwand (116; 216) angeordnete Trennwände (124; 224) aus isolierendem Material abgetrennt sind,
wobei individuelle Öffnungen (125; 225) vorgesehen sind, von denen jede von außerhalb des Raums (110; 210) direkten Zugang zu einer der Abteilungen für die elektrische Versorgung der in der Abteilung untergebrachten Anschlußklemmen (140; 240) gewährt,
wobei die Gerätehalterung außerdem wenigstens eine Isolationskappe (130; 130, 260) aufweist, die dazu ausgelegt ist, in den Raum (110; 210) eingefügt zu werden und die Anschlußklemmen (140; 240) einzuschließen, und die einzelne Öffnungen (135; 135, 265) aufweist, die dazu ausgelegt sind, jeweils durch die Montageöffnung (115) vom Inneren des Raums (110; 210) her direkten Zugang zu einer der Abteilungen zum Einführen eines Verbindungsstifts (28; 48; 58; 68; 78) des Gerätemechanismus (20; 30; 40; 50; 60; 70) in den in dieser Abteilung untergebrachten Anschlußstift (140; 240) zu gewähren.

2. Gerätehalterung gemäß Anspruch 1, bei der wenigstens eine der Abmessungen jeder einzelnen Öffnung jeder Isolationskappe kleiner als oder gleich 3,2 mm ist.

3. Gerätehalterung (100; 200) gemäß Anspruch 1, bei der wenigstens eine der Abmessungen jeder einzelnen Öffnung (135; 135, 265) jeder Isolationskappe (130; 130, 260) kleiner als oder gleich 1,2 mm ist.

4. Gerätehalterung gemäß einem der Ansprüche 1 bis 3, bei der die individuellen Öffnungen (125; 225) zur Bodenwand (116; 216) gehören.

5. Gerätehalterung (100; 200) gemäß Anspruch 3, bei der jede Isolationskappe (130; 130, 260) ein ins Innere des Raums (110; 210) eingebrachter Deckel ist, der die Trennwände (124; 224) bedeckt, um die Abteilungen zu schließen.

6. Gerätehalterung (100; 200) gemäß einem der Ansprüche 1 bis 5, bei der auf der Bodenwand (116; 216) Mittel (124; 224) zum Positionieren der Isolationskappe (130; 130, 260) vorgesehen sind.

7. Gerätehalterung (100; 200) gemäß einem der Ansprüche 1 bis 6, bei der nicht elektrische Kopplungsmittel (138; 138, 268) vorgesehen sind, die dazu bestimmt sind, mit dem Gerätemechanismus (20; 30; 40; 50; 60; 70) zusammenzuwirken.

8. Gerätehalterung (100; 200) gemäß Anspruch 7, bei der die nicht elektrischen Kopplungsmittel von jeder Isolationskappe (130; 130, 260) getragen werden.

9. Gerätehalterung (200) gemäß einem der Ansprüche 1 bis 8, bei der die Bodenwand (216) dazu ausgelegt ist, acht in acht Abteilungen in zwei Reihen zu vier Abteilungen untergebrachte Verbindungsklemmen (240) aufzunehmen.

10. Gerätehalterung (200) gemäß Anspruch 9, bei der zwei Isolationskappen (130, 260) vorgesehen sind, die in den Raum (210) eingebracht sind und die jeweils vier Verbindungsklemmen (240) umschließen.

11. Gerätehalterung (200) gemäß einem der Ansprüche 9 und 10, bei der wenigstens ein zum Zusammenwirken mit dem Gerätemechanismus (50; 60) ausgelegtes Unverwechselbarkeitsmittel (137) vorgesehen ist.

12. Gerätehalterung (200) gemäß Anspruch 11, bei der das Unverwechselbarkeitsmittel (137) von einer einzigen der beiden Isolationskappen (130) getragen wird.

13. Gerätehalterung (200) gemäß Anspruch 12, bei der das Unverwechselbarkeitsmittel (137) von den einzelnen Öffnungen (135) für den Zugang zu den Verbindungsklemmen (240) verschieden ist.

14. Gerätehalterung (200) gemäß einem der Ansprüche 12 und 13, bei der das Unverwechselbarkeitsmittel (137) der Isolationskappe (130) ein Schlitz ist.

15. Elektrisches Gerät (1) mit einer Gerätehalterung (100; 200) gemäß einem der Ansprüche 1 bis 14 und einem Gerätemechanismus (20; 30; 40; 50; 60; 70), der in dem Raum (110; 210) abnehmbar befestigt ist.

## Claims

1. An appliance support (100; 200) comprising a frame (107) provided with fastener means (111, 112, 113, 114) for fastening to an electrical box, the frame (107) presenting an inner edge that defines a mounting opening (115) for mounting an appliance mechanism (20; 30; 40; 50; 60), the inner edge being extended rearwards by a side wall (117) that defines a housing (110; 210) for receiving said appliance mechanism (20; 30; 40; 50; 60; 70), said housing (110; 210) being closed at the back by a back wall (116; 216) that completely closes said housing (110; 210),
wherein said back wall (116; 216) is arranged to receive at least three electrical connection terminals (140; 240) housed in three mutually insulated compartments, said compartments being defined by partitions (124; 224) made of insulating material and placed on an inside face of the back wall (116; 216),
wherein individual orifices (125; 225) are provided, each giving access from outside the housing (110; 210) directly to a respective one of said compartments for electrically powering the connection terminal (140; 240) housed in said compartment,
said appliance support further comprising at least one insulating cover (130; 130, 260) that is configured to be fitted in said housing (110; 210) and to enclose said connection terminals (140; 240), and that includes individual openings (135; 135, 265) each configured to give access via the mounting opening (115) from the inside of the housing (110; 210) directly to a respective one of the compartments for inserting a connection pin (28; 48; 58; 68; 78) of the appliance mechanism (20; 30; 40; 50; 60; 70) in the connection terminal (140; 240) housed in said compartment.

2. An appliance support according to claim 1, wherein at least one of the dimensions of each individual opening of each insulating cover is less than or equal to 3.2 millimeters.

3. An appliance support (100; 200) according to claim 1, wherein at least one of the dimensions of each individual opening (135; 135, 265) of each insulating cover (130; 130, 260) is less than or equal to 1.2 millimeters.

4. An appliance support according to any one of claims 1 to 3, wherein the individual orifices (125; 225) are formed in the back wall (116; 216).

5. An appliance support (100; 200) according to claim 3, wherein each insulating cover (130; 130, 260) is a lid fitted inside the housing (110; 210) and covering said partitions (124; 224) for closing said compartments.

6. An appliance support (100; 200) according to any one of claims 1 to 5, wherein positioning means (124; 224) are provided on the back wall (116; 216) for positioning the insulating cover (130; 130, 260).

7. An appliance support (100; 200) according to any one of claims 1 to 6, wherein non-electrical coupling means (138; 138, 268) are provided for cooperating with said appliance mechanism (20; 30; 40; 50; 60; 70).

8. An appliance support (100; 200) according to claim 7, wherein the non-electrical coupling means are carried by each insulating cover (130; 130, 260).

9. An appliance support (200) according to any one of claims 1 to 8, wherein said back wall (216) is arranged to receive eight connection terminals (240) that are housed in eight compartments, in two rows of four compartments.

10. An appliance support (200) according to claim 9, wherein two insulating covers (130, 260) are provided that are fitted in said housing (210) with each enclosing four connection terminals (240).

11. An appliance support (200) according to claim 9 or claim 10, wherein at least one keying means (137) is provided that is adapted to cooperate with said appliance mechanism (50; 60).

12. An appliance support (200) according to claim 11, wherein said keying means (137) is carried by only one of the two insulating covers (130).

13. An appliance support (200) according to claim 12, wherein said keying means (137) is distinct from said individual openings (135) giving access to the connection terminals (240).

14. An appliance support (200) according to claim 12 or claim 13, wherein said keying means (137) of the insulating cover (130) is a slot.

15. An electrical appliance (1) comprising an appliance support (100; 200) according to any one of claims 1 to 14 and an appliance mechanism (20; 30; 40; 50; 60; 70) fastened in said housing (110; 210) in releasable manner.
